**Europäisches Patentamt**

**European Patent Office**

**Office européen des brevets**

(11) Veröffentlichungsnummer: **0 054 875**
A2

## (12) EUROPÄISCHE PATENTANMELDUNG

(21) Anmeldenummer: **81110402.5**

(22) Anmeldetag: **12.12.81**

(51) Int. Cl.³: **B 62 D 49/06, B 62 D 51/06, B 62 D 53/04**

(30) Priorität: **24.12.80 DE 3049055**

(43) Veröffentlichungstag der Anmeldung: **30.06.82** Patentblatt 82/26

(84) Benannte Vertragsstaaten: **AT CH FR GB LI**

(71) Anmelder: **Weichel, Ernst, Bahnhofstrasse 1, D-7326 Heiningen (DE)**

(72) Erfinder: **Weichel, Ernst, Bahnhofstrasse 1, D-7326 Heiningen (DE)**

(54) **Motorische Antriebseinheit zur Bildung verschiedenartig aufgebauter, selbstfahrender landtechnischer Geräte.**

(57) Es ist vorgesehen, verschiedenartig aufgebaute landtechnische Fahrzeuge oder Bearbeitungseinheiten durch Zusammenfügen einer einachsigen, lenkbaren, motorischen Grundeinheit (G) mit entsprechenden Geräten oder Maschinengruppen (M) zu bilden.

Hierzu weist die motorische Grundeinheit (G) zwei spiegelbildlich zu ihrer Antriebsachse (A) liegende Kupplungen (K) gleicher Grösse auf und die Anbaugeräte bzw. Geräteteile (M) besitzen entsprechende Kupplungsgegenstücke (K'). Die Kupplungsteile (K bzw. K') sind zudem als sog. Schnellkupplungen ausgebildet und es können innerhalb dieser Kupplungen (K, K') auch selbstkuppelnde Schnellanschlüsse für die erforderlichen elektrischen und/oder hydraulischen Verbindungsleitungen liegen.

0054875

ERNST   WEICHEL          D 7326 HEININGEN, 1.12.1981

Bahnhofstraße 1

Motorische Antriebseinheit zur Bildung verschiedenartig aufgebauter, selbstfahrender landtechnischer
Geräte

---

Die Erfindung bezieht sich auf eine motorische
Antriebseinheit nach dem Oberbegriff des Hauptanspruchs sowie auf damit gebildete Geräte.

Der Maschinen- und Gerätepark gut mechanisierter, landwirtschaftlicher Betriebe stellt insgesamt betrachtet in der heutigen Zeit ein mehr oder weniger zufällig entstandenes Gemisch unterschiedlichster Zugmaschinen und Bearbeitungseinheiten dar. Hieraus resultieren bei fast allen Betrieben Nachteile wirtschaftlicher, arbeitswirtschaftlicher, wie auch produktionstechnischer Art, die im wesentlichen in schlechter Ausnutzung teurer Einzelmaschinen, zeitraubenden An- und Abbauarbeiten verschiedenster Arbeitsgeräte und Verwendung nicht optimaler Maschinen zur Pflege bzw. Verbesserung der Bodenstruktur bestehen.

- 2 -

Die bisherige Hochmechanisierung hatte zudem die sicherlich ungewollte Nebenwirkung, daß die Landwirte, je moderner ihre Maschinen sind, desto mehr Geld für immer teurere und problematischer werdende Dünge- und Schädlingsbekämpfungsmittel ausgeben müssen und somit immer weniger Geld zur Bezahlung besserer Maschinen zur Verfügung haben.

Es sollte daher Aufgabe jeder künftigen landtechnischen Entwicklung sein, sicherzustellen, daß neue Landmaschinen entweder die Erträge der landwirtschaftlichen Nutzflächen durch bessere Arbeitsqualitäten steigern, oder daß sie den Aufwand für Agrarchemikalien so senken, daß auch durchschnittliche landwirtschaftliche Betriebe in die Lage kommen, die arbeitswirtschaftlich, produktionstechnisch, volkswirtschaftlich und ökologisch optimalen Maschinen anzuwenden und aus deren Mehrerträge zu finanzieren.

- 3 -

Derartige Überlegungen führen hinsichtlich des benötigten Maschinenparks daher zwangsläufig zu baukastenartig aufbau- und umrüstbaren Mehrzweck-Einheiten nach dem Oberbegriff des Hauptanspruchs und wie sie beispielsweise vom Prinzip her bereits aus den alten deutschen Patentschriften 420 654 und 872 874 bekannt sind. Die in diesen Druckschriften gezeigten, maschinellen Systeme sind allerdings in Funktion und Aufbau für die heutigen Anforderungen der modernen Landwirtschaft gänzlich ungeeignet, da sie nur eine ganz geringe Variationsbreite im Aufbau unterschiedlicher Geräteeinheiten zulassen.

Hier setzt nun die vorliegende Erfindung ein, mit der Aufgabe der Schaffung eines neuartigen Systems einer entsprechend baukastenartigen, maschinellen Grundausrüstung, die den raschesten und vielfältigsten Aufbau aller in der modernen Landtechnik benötigter, selbstfahrender Geräte und Gerätekombinationen vom einfachen Transportwagen bis hin zum Mähdrescher oder aufwendigsten Bodenbearbeitungsgerät ermöglicht.

Gelöst wird diese Aufgabe durch die in den Patentansprüchen angegebenen baulichen und gerätetechnischen Maßnahmen, wobei letztere in den Zeichnungen als weitestgehend schematische Darstellungen beispielsweise angedeutet und anhand dieser Figuren im einzelnen näher erläutert sind.

Es zeigen

Figur 1   eine Seitenansicht der erfindungsgemäßen Grundeinheit (G),

Figur 2   eine Ansicht zu Figur 1 in Fahrtrichtung,

Figur 3   eine Draufsicht zu Figur 1,

Figur 4   das erfindungsgemäße Grundgerät mit Hilfsachse in Seitenansicht,

Figur 5   ebenfalls in Seitenansicht verschiedene
bis       Gerätezusammenstellungen in Verbindung
Figur 9   mit der Grundeinheit (G).

- 5 -

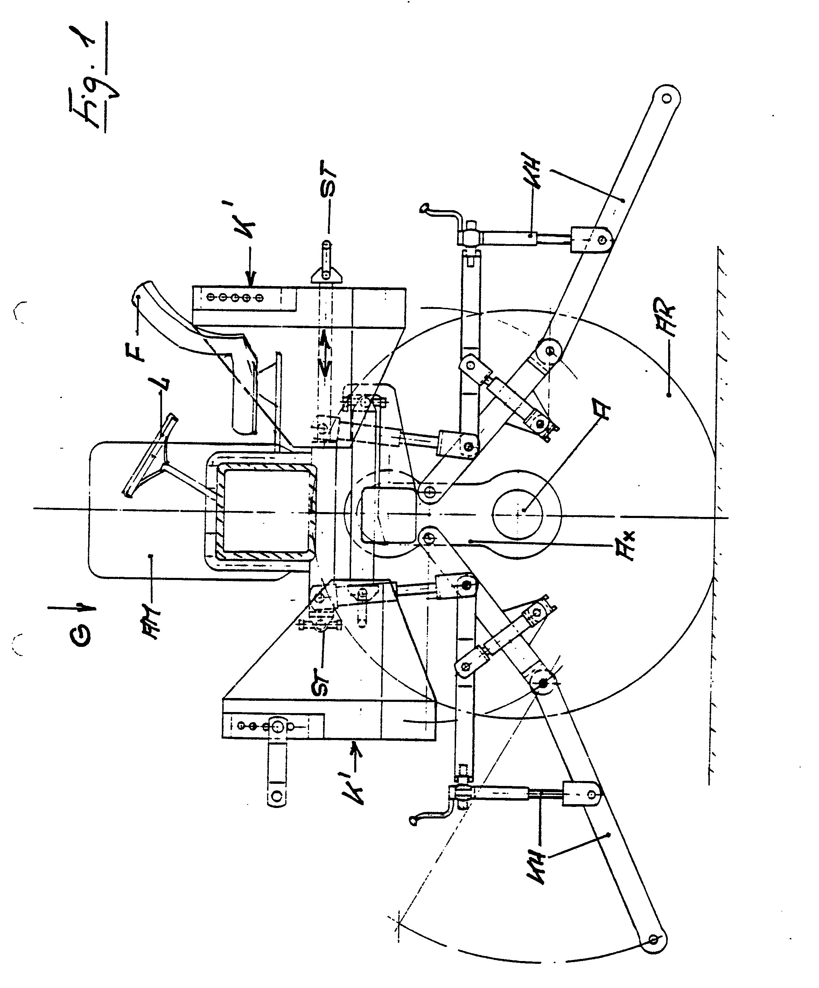

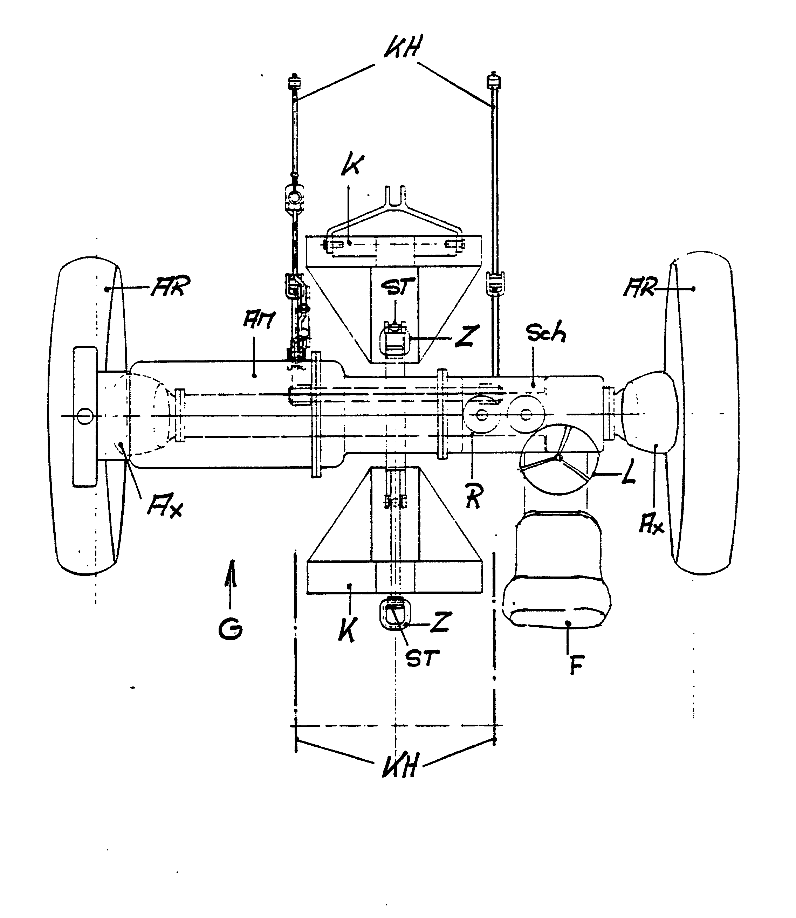

Die in den Fig. 1 bis 3 als Einzelteil dargestellte, lenkbare, einachsige, motorische
Grundeinheit, weist als wesentliche Bauelemente
zwei spiegelbildlich zur Antriebsachse A liegende Kupplungsstücke K, K' sowie diesen zugeordnete
Krafthebergestänge KH, ähnlich den von Schleppern
her bekannten auf, die ebenfalls spiegelbildlich
zur Antriebsachse A in nicht näher dargestellter
Weise am Rahmen R befestigt und in üblicher Weise
in ihrer jeweiligen Position veränder- bzw. einstellbar sind.

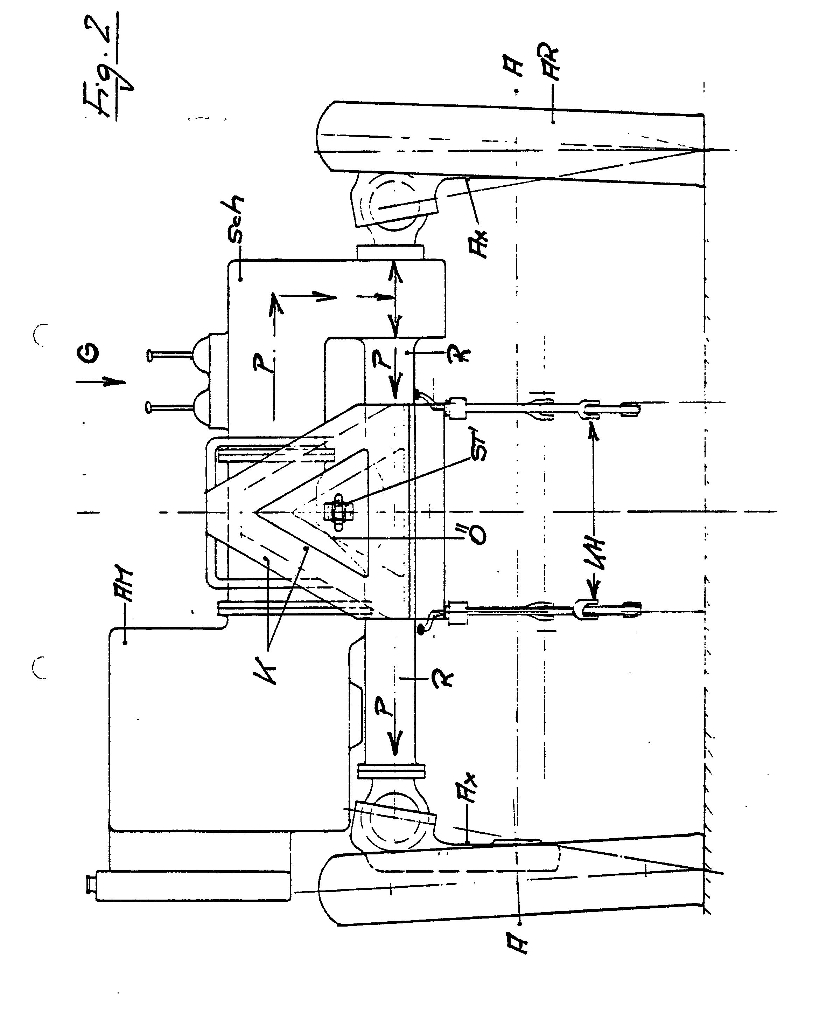

Die Kupplungsstücke K sind dabei gemäß der Erfindung als Schnellkupplungen ausgebildet, d.h. über
Hydraulikzylinder o.ä. betätigte Greiferstangen
ST können vom Fahrer mechanisch, selbttätig ausgefahren und mit diesen korrespondierende Zugösen Z
o.dgl. erfaßt werden, die an korrespondierenden
Kupplungsgegenstücken K' der Hilfsachse A' bzw.
deren Rahmen R' angebracht sind. Wie in Fig. 2 angedeutet ist, sollten dabei die Maulöffnungen Ö

- 6 -

der Kupplungsteile K so ausgebildet sein, daß sie beim Einfahren der Kupplungsgegenstücke K' diese selbsttätig zentrieren; halbgelöste Zwischenstellungen zur eventuellen Höhenanpassung einzelnen  Zusatzgeräte sind bei einem derartigen Kupplungsvorgang sowohl in der Phase des An- wie auch Entkuppelns möglich. Das erfindungsgemäße Schnellkupplungssystem bietet zudem noch den Vorteil, daß in die korrespondierenden Kupplungsteile K und K' auch die Anschluß- bzw. Verbindungselemente für hydraulische und elektrische Leitungen mit einbezogen werden können, und somit nicht mehr wie bisher einzeln manuell gekoppelt werden müssen.

Ebenfalls aus Fig. 2 gut ersichtlich ist die portalartige Ausbildung des Rahmens R mit den Achsschenkeln Ax der motorischen Grundeinheit G, wodurch sich eine große Bodenfreiheit und somit die Möglichkeit ergibt, wie es beispielsweise aus Fig. 7 zu ersehen ist, auch Gerätekombinationen zusammenzustellen, die zwischen den Antriebsrädern AR hindurch verlaufen und von

- 7 -

dem vorderen und/oder hinteren Krafthebergestänge KG getragen werden. Die motorische Grundeinheit G wird noch vervollständigt durch den Antriebsmotor AG, das Schaltgetriebe Sch mit Kraftfluß gemäß Pfeilangabe P und dem Fahrersitz F mit Lenkrad L.

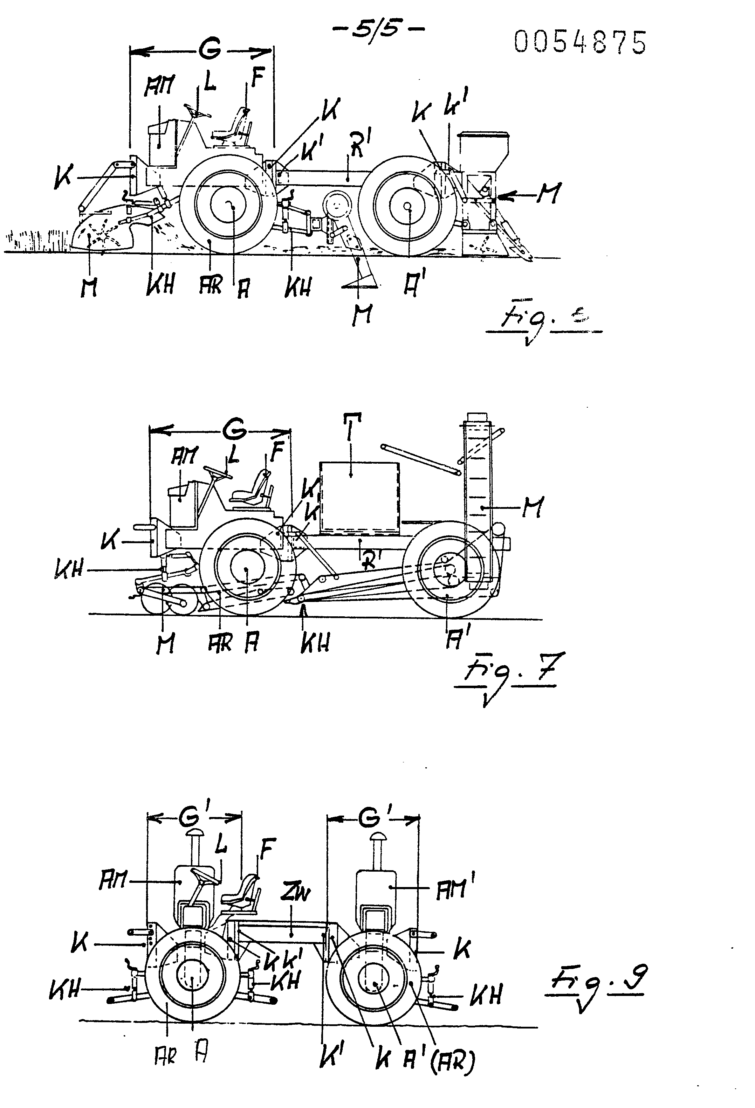

Mit der zuvor vom baulichen Prinzip her beschriebenen, motorischen Grundeinheit können nunmehr fast sämtliche Transportgeräte T und Arbeitsmaschinen M für die Landwirtschaft baukastenmäßig zusammengestellt werden, für die bislang entweder ohnehin eine Zugmaschine oder ein spezieller Eigenantrieb erforderlich waren. Als zeichnerische Beispiele hierfür sind angegeben Mulch- oder Fräsgerät in Fig. 5, Flüssigkeitstank in Fig. 6, Bodenbearbeitungs- und Drillgerät in Fig. 8, wobei bei dieser Ausführung am Ende der zweiten Achse A' eine weitere Schnellkupplungseinheit K, K' sitzt, oder es kann ein Rüben- bzw. Kartoffelerntegerät gemäß Fig. 7 zum Anbau verwendet werden. Über eine Zwischenbrücke ZW mit entsprechenden Kupplungsstücken ist es zudem im

- 8 -

Rahmen der vorliegenden Erfindung möglich,
auch zwei der motorischen Grundeinheiten G
mit G' zu einem allradangetriebenen Fahrzeug
zusammenzufassen; eine derartige Variante
zeigt die Darstellung in Fig. 9.

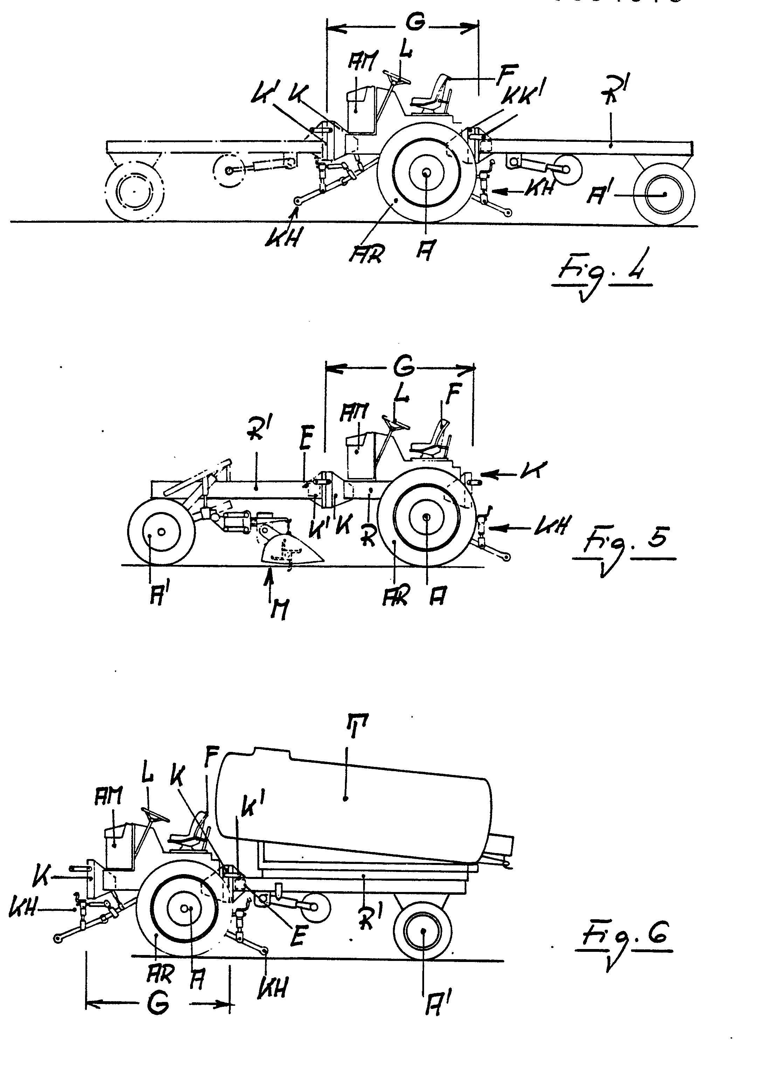

Voraussetzung aller dieser An- bzw. Umrüstvorgänge ist aber stets, daß im Ausgangsstadium
die sogenannte separat abstellbare Hilfsachse
gem. Fig. 4 derart Anwendung findet, daß in jeweils aufeinanderfolgenden, einzelnen Verfahrensschritten mit einer an der Vorder- oder Rückseite
der angetriebenen Grundeinheit angekuppelten
Hilfsachse zu dem Abstellplatz mindestens eines
der verschiedenen Transport- oder Arbeitsgeräte
gefahren und dieses entweder zusätzlich zu der
Hilfsachse oder anstelle ders-elben an der
lenkbaren Grundeinheit angekoppelt und die Hilfsachse danach gelöst sowie abgestellt wird, wobei
beim Wechsel der einzelnen Arbeitsgeräte bzw.
Gerätegruppen oder Maschinen an der motorischen
Grundeinheit in jeder Verfahrensphase mindestens
eine stützende zweite Achse mit mindestens einem
Laufrad angekoppelt ist.

- 1 -

P a t e n t a n s p r ü c h e

1. Motorische Antriebseinheit zur Bildung verschiedenartig aufgebauter, mindestens 2-achsiger, selbstfahrender landtechnischer Transportgeräte bzw. Arbeitsmaschinen aus einer einachsigen sowie lenkbaren motorischen Grundeinheit, in Verbindung mit an der Vorder- bzw. Rückseite letzterer ankuppelbarer spezieller Aggregate mit einer oder mehreren weiteren Achsen,

dadurch gekennzeichnet,

daß die lenkbare einachsige motorische Grundeinheit (G) spiegelbildlich zur Antriebsachse (A) liegende gleichartige Kupplungen (K) aufweist und die freien Anschlußenden (E) der jeweiligen, die zweite Achse (A') tragenden Geräte- bzw. Maschinengruppen (M) mit hierzu passenden Kupplungsgegenstücken (K') versehen sind.

005487

- 2 -

2. Gerät nach Anspruch 1,

   dadurch gekennzeichnet,

   daß die Kupplungen (K, K') als selbsttätig
   zentrierende Schnellkupplungen ausgebildet
   und mechanisch, elektrisch, hydraulisch o.ä.
   betätigbar sind.

3. Gerät nach den Ansprüchen 1 und 2,

   dadurch gekennzeichnet,

   daß jede der Kupplungen (K) unabhängig voneinander bewegbare Greiferstangen (ST) o.dgl.
   aufweist und die Kupplungsgegenstücke (K') mit
   hierzu korrespondierenden Zugösen (Z) o.dgl.
   versehen sind.

4. Gerät nach den Ansprüchen 1 bis 3,

   dadurch gekennzeichnet,

   daß die mechanischen Schnellkupplungselemente
   (K bzw. K') zugleich die Anschlüsse bzw. Verbindungen für das elektrische und/oder hydraulische Versorgungsnetz als selbsttätig kuppelnde
   Steckverbindungen o.dgl. enthalten.

- 3 -

5. Gerät nach den Ansprüchen 1 bis 4,

dadurch gekennzeichnet,

daß zusätzlich zu den Kupplungen (K) am Rahmen (R) der motorischen Grundeinheit (G) ebenfalls spiegelbildlich liegende, von Schleppern an sich bekannte Krafthebergе-

stänge (KH) angebracht sind.


6. Gerät nach den Ansprüchen 1 bis 5,

dadurch gekennzeichnet,

daß der Rahmen (R) der motorischen Grundeinheit (G) portalartig ausgebildet sowie über Achsschenkel (Ax) in den Radachsen (A) abgestützt ist und oberhalb letzterer verläuft.


7. Gerät nach Anspruch 6,

dadurch gekennzeichnet,

daß die Antriebselemente von einem oberhalb des Rahmens (R) liegenden Schaltgetriebe (Sch) aus durch den Rahmen (R) hindurch (Pfeile P) zu den Achsschenkeln (Ax) bzw. Antriebsrädern (Ar)

verlaufen.

0054875

Fig. 1

Fig. 2

0054875

Fig. 3

0054875

Fig. 4

Fig. 5

Fig. 6

0054875

_Fig. 8_

_Fig. 7_

_Fig. 9_